# EUROPEAN PATENT APPLICATION

(11) **EP 3 413 275 A1**
(43) Date of publication of application: **12.12.2018**
(21) Application number: 17306554.1
(22) Date of filing: 09.11.2017
(51) Int. Cl.: G07C 9/00, G08B 13/00

(54) **METHOD FOR CONTROLLING PHYSICAL ACCESS TO A RESTRICTED SPACE**

(30) Priority: 07.06.2017 EP 17305677
(71) Applicant: GEMALTO SA, 92190 Meudon (FR)
(72) Inventor: MARTINEZ, Frédéric, 13881 Gemenos Cedex (FR); CARUANA, Jean-Paul, 13881 Gemenos Cedex (FR)

(57) **Abstract**

The invention is a method for controlling physical access to a restricted space. A gateless control area is located at an entrance of the restricted space and is equipped with both an image sensor (40) and an Ultra-Wideband reader (30). The method comprises the steps of:
- selecting a user (80) from a crowd (60) located in the gateless control area and capturing both a digital picture and coordinates of the user,
- extracting from the digital picture a measured biometric pattern,
- securely reading a secure data memorized in a wearable identity device (50) whose distance with said coordinates is less than a predetermined threshold and getting a reference biometric pattern (52) using said secure data,
- checking that said measured biometric pattern matches said reference biometric pattern, the user being identified as authorized only in case of successful checking.

## Description

### (Field of the invention)

The present invention relates to methods of controlling physical access to a restricted space. It relates particularly to methods of automating control access of people according to their identity.

### (Background of the invention)

Due to security and legal rules, access to school must be carefully checked in order to verify that only authorized children can enter. Currently, a child must wear a school contact book which is a paper book containing a picture of the child. A security officer manually checks the identity of the child at the gate of the school. Due to the large number of children which must enter in a short time, the security officer usually faces a peak of activity which creates a bottleneck and slows down the flow of children. Consequently, the time spent verifying the identity of each child is greatly reduced, which can lead to security breaches.

There is a need for providing a solution allowing to check rapidly the identity of children at school entrance.

### (Summary of the Invention)

The invention aims at solving the above mentioned technical problem.

The object of the present invention is a method for controlling physical access to a restricted space. A gateless control area is located at an entrance of the restricted space and is equipped with both an image sensor and an Ultra-Wideband reader. The method comprises the steps of:
- selecting a user from a crowd located in the gateless control area and capturing by the image sensor both a digital picture of the user and coordinates of the user,
- extracting from the digital picture a measured biometric pattern,
- securely reading by the Ultra-Wideband reader a secure data memorized in a wearable identity device whose distance with said coordinates is less than a predetermined threshold and getting a reference biometric pattern using said secure data, and
- checking that said measured biometric pattern matches said reference biometric pattern, the user being identified as authorized only in case of successful checking.

Advantageously, the reference biometric pattern may be either comprised in the secure data or may be retrieved from a server using the secure data.

Advantageously, if the Ultra-Wideband reader fails to perform the reading step, the user may be identified as unauthorized.

Advantageously, the wearable identity device may be a school contact book.

Advantageously, the measured biometric pattern may be a facial data.

Advantageously, a warning message comprising a subset of the digital picture may be sent to a supervisor in case of unsuccessful checking.

Another object of the invention is a wearable identity device comprising an Ultra-Wideband controller and a secure element storing a secure data associated with a user and allowing to get a reference biometric pattern and able to establish a communication channel with an Ultra-Wideband reader. The secure element is configured to authorize retrieving of the reference biometric pattern by the Ultra-Wideband reader only if the communication channel has been securely established.

Advantageously, the reference biometric pattern may be a facial data.

Advantageously, the wearable identity device may be a school contact book.

Advantageously, the wearable identity device may store a timetable or canteen rights.

Another object of the invention is a gateless system comprising an image sensor adapted to select a user from a crowd located in a gateless control area and to capture both a digital picture of the user and coordinates of the user. The gateless system is configured to extract a measured biometric pattern from the digital picture. The gateless system comprises an Ultra-Wideband reader configured to securely read a secure data memorized in a wearable identity device whose distance with said coordinates is less than a predetermined threshold and to get a reference biometric pattern using said secure data. The gateless system comprises a verifier computer configured to retrieve the measured biometric pattern and the reference biometric pattern and to check that the measured biometric pattern matches the reference biometric pattern and to identify the user as authorized only in case of successful checking.

Advantageously, the gateless system may be configured to retrieve the reference biometric pattern from a server using the secure data or to extract the reference biometric pattern from the secure data.

Advantageously, the verifier computer may be configured to identify the user as unauthorized if the Ultra-Wideband reader fails to perform the reading of the reference biometric pattern.

Advantageously, the verifier computer may be configured to send to a supervisor a warning message comprising a subset of the digital picture in case of unsuccessful checking.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of architecture of a system for checking identity of children at school gate according to an embodiment of the invention;
- Figure 2 depicts schematically an example of architecture of a wearable school device according to an embodiment of the invention; and
- Figure 3 is an example of a flowchart for controlling access to a restricted area according to an embodiment of the invention.

### (Detailed description of the preferred embodiments)

The invention may apply to any type of restricted spaces or restricted areas. It may apply to restricted spaces having several entrances, provided that a gateless control area is installed at each entrance. The wearable identity device may be any wireless device which can be easily transported by a user on the body, on the clothes or in a bag. For example, the wearable identity device may be a wearable school device, bracelet, a tablet, a key fob, a card, or any electronic computer machine. The restricted space may be a school, a building, a vehicle, a personal home, or even a transport network.

Thanks to the invention, users benefit of a hands free solution where a communication session is automatically set between a wireless reader and the users' device without the need to tap. Users can walk naturally without worrying about having to do something special.

An advantage of the invention is to provide a solution which accurately identifies each user among a large number of people on the move.

Thanks to the invention a large payload may be retrieved quickly from the wearable identity device. Since pictures with high definition can be red, the amount of information that can be used for biometric verification is very high and allows a level of recognition of very high level.

An advantage of the invention is to provide a solution which may be used for automatically identifying people which leave the restricted area.

Thanks to the high time performance of the invention, the solution allows to get an accurate status of the people remaining in the restricted area even in case of urgent evacuation. (For example due to a fire or any alarm.)

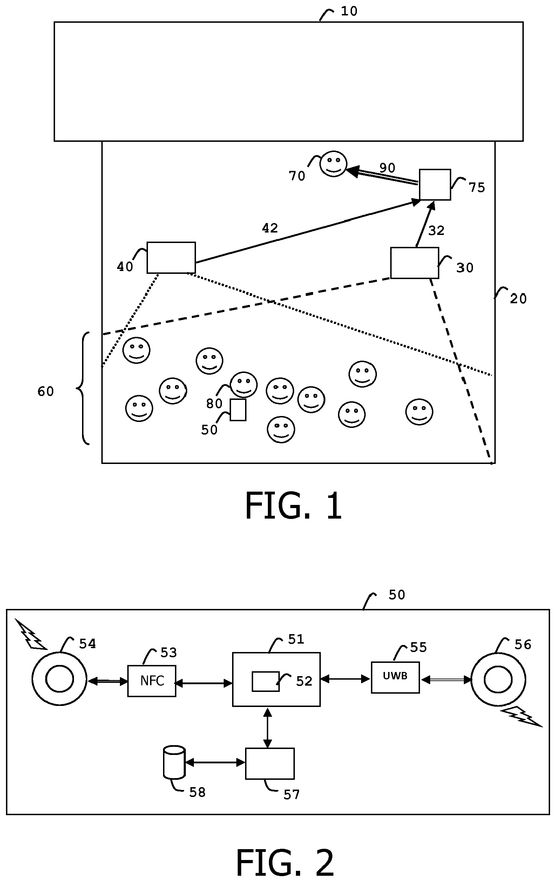

**Figure 1** shows an example of a gateless system for controlling access to a restricted space 10. In this example, the restricted space 10 is a school having a unique entrance.

A gateless control area 20 is located at the entrance of the restricted space 10. The gateless control area 20 offers a space large enough for a large number of people to pass through it together. Thus a crowd 60 may be located in the gateless control area 20. In this specifications, crowd means a large group or set of people. For example the crowd may gathers ten, fifteen, forty, sixty people or even more.

The gateless control area 20 is equipped with an image sensor 40, an Ultra-Wideband reader 30 and a verifier computer 75.

Preferably, the image sensor 40 is installed in height so that it can take pictures of all the people present.

Advantageously, the image sensor 40 may comprise multiple lenses allowing to get several snapshots from different angles. In this case location of the user can be refined by triangulation. In addition, the plurality of pictures may enhance the operation of biometric data checking.

It is to be noted that the fact to enter the gateless control area 20 means that the user gives his consent to the reading of his wearable school device and to be photographed.

The Ultra-Wideband reader 30 is able to establish a large number of UWB (Ultra-Wideband) communication sessions in parallel with many wearable identity devices.

Preferably the Ultra-Wideband reader 30 handles credential allowing to manage secure UWB communication sessions with the wearable devices. For example, a secret key may be preinstalled in both the Ultra-Wideband reader 30 and the wearable devices. Thanks to the geolocation feature of the Ultra-Wideband, the UWB reader 30 can know the precise location of a wearable device it is reading.

Advantageously, the UWB reader 30 may comprise multiple wireless units allowing to establish several communication sessions with a single wearable device from different angles. In this case location of the wearable device can be refined by triangulation.

The verifier computer 75 is linked to the image sensor 40 and to the UWB reader 30. For example they may communicate through a private network. The verifier computer 75 is configured to retrieve the pair 42 comprising the picture and its associated coordinates from the image sensor 40 and the pair 32 comprising the reference biometric pattern and the location of its corresponding wearable identity device from the UWB reader 30.

The verifier computer 75 is adapted to check that the measured biometric pattern matches the reference biometric pattern and to identify the user as authorized only in case of successful checking.

In a preferred embodiment, the measured biometric pattern and the reference biometric pattern are facial data. Alternatively, these biometric patterns can depend on the height of the user or the corpulence/silhouette of the user. They may also depend on the iris of the eye.

The verifier computer 75 is adapted to identify the user as unauthorized if the Ultra-Wideband reader fails to perform the reading of a reference biometric pattern in a wearable identity device whose coordinates match the coordinates of the user taken in picture. Both coordinates are considered as matching if the distance separating them is less than a predetermined threshold. For example, the predetermined threshold may be set to 40cm. Preferably, the threshold may comprises three different values for each axis of 3D coordinates.

In this example, the verifier computer 75 is configured to send to a supervisor 70 (also called security officer) a warning message 90 comprising a subset of the digital picture in case of unsuccessful checking. Thus the supervisor 70 will be able to intercept the unauthorized user thanks to his picture.

Advantageously, the wearable identity device may store an identifier of the user to which the wearable identity device is allocated. Thus the UWB reader 30 may read the identifier and send it to the verifier computer 75 which can log the identifier.

In another embodiment, the verifier computer 75 may be merged with the UWB reader 30 or with the image sensor 40. In another embodiment, the verifier computer 75 may be located outside the gateless control area 20.

UWB is defined by IEEE 802.15.4a standard. Unlike Conventional radio transmissions systems, UWB transmit information by generating radio energy at specific time intervals and occupying a large bandwidth, thus enabling pulse-position or time modulation. An important aspect of UWB technology is the ability to wirelessly communicate through user's body, clothes or bags. In other words, user's body, clothes or bags do not constitute a barrier to UWB communication.

Another important aspect of UWB technology is the ability for a UWB radio system to measure the distance between two communicating objects and to detect the position of a communicating object relative to another communicating object with an accurate precision.

UWB technology is able to resist to Channel Impairments (interferences) because multiple paths are distinguishable. It can be implemented to be robust to interference and to reliably manage anti-collision.

It is to be noted that the data transmission rate via the UWB technology is very high and allow conveying large files or datasets.

Advantageously, thanks to UWB features, the UWB reader 30 can also determine the movement direction of the wearable device 50 so as to take into account the walk direction of the person carrying it. Thus the UWB reader can filter people which are either entering or exiting the restricted area 10. The movement direction may be computed from a sequence of measures of the wearable identity device position.

The gateless control area 20 may be equipped with a plurality of image sensors. In particular, the gateless control area 20 may be equipped with image sensors oriented towards the inside of the restricted space so as to control people who leave the restricted space. Naturally, several gateless control areas may be attached to a single restricted space in order to cover all the inlet and outlet passages of the restricted area (i.e. all entrances and exits).

In the above-described examples, the wearable identity device comprises a secure identifier which is the reference biometric pattern 52.

Alternatively, the wearable identity device may comprise a secure identifier which is used to retrieve the reference biometric pattern from a server machine. The server machine may be part of the gateless system or reachable by the gateless system through a network.

**Figure 2** depicts schematically an example of architecture of a wearable identity device according to an embodiment of the invention.

In this example, the wearable identity device 50 is a wearable school contact book.

The wearable identity device 50 comprises a UWB controller 55 coupled to a UWB antenna 56.

The device 50 comprises a battery 58 coupled to a power manager 57. These components make it possible to provide energy to the UWB controller 55.

The device 50 comprises a NFC controller 53 coupled to a NFC antenna 54. Although optional, these components allow to access data stored in the device 50 even if the battery 58 is empty.

The identity device 50 comprises a secure element 51 linked to both the UWB controller 55 and the NFC controller 53. The secure element 51 is able to communicate with wireless readers through UWB and NFC communication sessions.

The secure element 51 has a processor and a nonvolatile memory storing both an operating system and reference biometric pattern 52 of the user to whom the wearable identity device 50 is allocated. Preferably the nonvolatile memory stores additional data like the name of the user, a timetable, an exit authorization or canteen rights.

Preferably the nonvolatile memory stores credential (e.g. a secret key or a certificate) which is used by the operating system (running on the processor) to securely establish a communication session with a wireless reader.

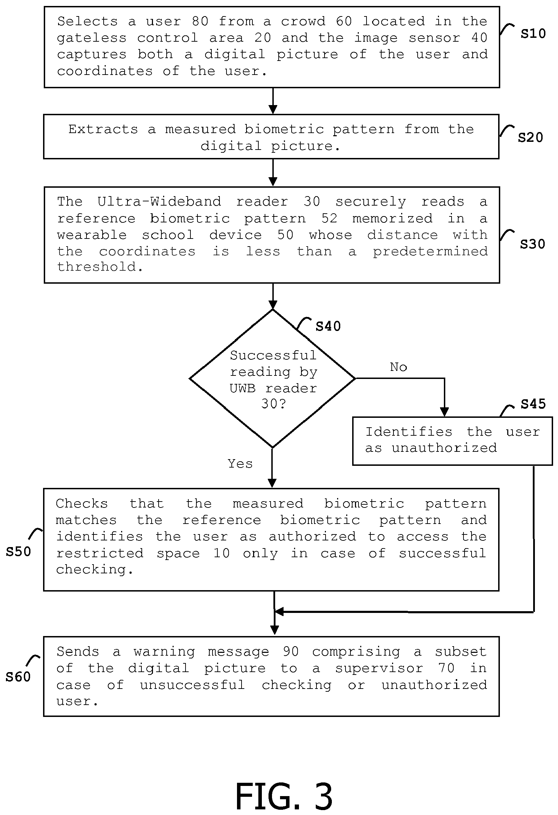

**Figure 3** shows an example of a flowchart for controlling access to a restricted area according to an embodiment of the invention.

The elements of the system are assumed to be similar to those described at Figure 1.

At step S10, the image sensor 40 selects a user 80 from the crowd 60 located in the gateless control area 20 and the image sensor 40 captures both a digital picture of the user 80 and coordinates of the user 80.

At step S20, the system extracts a measured biometric pattern from the digital picture. This step may be carried out by the image sensor 40, the verifier computer 75 or the UWB reader 30.

At step S30, the Ultra-Wideband reader 30 tries to securely read a reference biometric pattern 52 memorized in a wearable identity device 50 whose distance with the user's coordinates is less than a predetermined threshold.

At step S40, the system checks if the Ultra-Wideband reader 30 succeeded to securely read a reference biometric pattern at a relevant location. In case of failure, the user 80 is considered as unauthorized to access the restricted space 10 at step S45. Preferably, a warning message is sent to a security officer 70 which can take an appropriate action. For instance, the security officer 70 can intercept the user 80 and ask him for additional information. For example, the security officer 70 may try to read the content of the wearable identity device handled by the user 80 thanks to a NFC reader.

In case of successful checking at step S40, the system checks that measured biometric pattern matches the reference biometric pattern at step S50. The user is considered as authorized to access the restricted space 10 only in case of successful matching. Advantageously, an identifier of the user may be retrieved from the wearable identity device and logged in a computer (which may be the verifier computer 75 or a distinct machine) in order to update a list of people present in the restricted space 10.

If the matching operation failed, a warning message 90 comprising data related to the user is sent to the security officer 70 (i.e. the supervisor) at step S60. Preferably the warning message 90 comprises a subset of the digital picture.

Advantageously, the camera system (i.e. image sensor) or the UWB reader may be configured to recognize a same person already controlled (less than 1 or 2 minutes ago for instance) and to prevent a new verification in order to avoid repeating controls on the same individual.

The invention is not limited to access to school and may apply to any kind of restricted areas.

The invention is not limited to the described embodiments or examples.

## Claims

1. A method for controlling physical access to a restricted space (10),
**characterized in that** a gateless control area (20) is located at an entrance of the restricted space and is equipped with both an image sensor (40) and an Ultra-Wideband reader (30), and **in that** the method comprises the steps of:
- selecting (S10) a user (80) from a crowd (60) located in the gateless control area and capturing by the image sensor both a digital picture of the user and coordinates of the user,
- extracting (S20) from the digital picture a measured biometric pattern,
- securely reading (S30) by the Ultra-Wideband reader a secure data memorized in a wearable identity device (50) whose distance with said coordinates is less than a predetermined threshold and getting a reference biometric pattern (52) using said secure data,
- checking (S50) that said measured biometric pattern matches said reference biometric pattern, the user being identified as authorized only in case of successful checking.

2. The method according to claim 1, wherein the reference biometric pattern is either comprised in the secure data or is retrieved from a server using the secure data.

3. The method according to claim 1, wherein if the Ultra-Wideband reader fails to perform the reading step, the user is identified as unauthorized.

4. The method according to any of the preceding claims, wherein the wearable identity device is a school contact book.

5. The method according to any of the preceding claims, wherein the measured biometric pattern is a facial data.

6. The method according to claim 1, wherein a warning message (90) comprising a subset of the digital picture is sent (S60) to a supervisor (70) in case of unsuccessful checking.

7. A wearable identity device (50) **characterized in that** the wearable identity device comprises an Ultra-Wideband controller,
**in that** the wearable identity device comprises a secure element (51) storing a secure data associated with a user (80) and allowing to get a reference biometric pattern (52) and able to establish a communication channel with an Ultra-Wideband reader (30), said secure element being configured to authorize retrieving of the reference biometric pattern by the Ultra-Wideband reader only if the communication channel has been securely established.

8. The wearable identity device according to claim 7, wherein the reference biometric pattern is a facial data.

9. The wearable identity device according to claim 7, wherein the wearable identity device is a school contact book.

10. The wearable identity device according to claim 9, wherein the wearable identity device stores a timetable or canteen rights.

11. A gateless system comprising an image sensor (40),
**characterized in that** the image sensor is adapted to select a user (80) from a crowd (60) located in a gateless control area (20) and to capture both a digital picture of the user and coordinates of the user,
**in that** the gateless system is configured to extract a measured biometric pattern from the digital picture,
**in that** the gateless system comprises a Ultra-Wideband reader (30) configured to securely read a secure data memorized in a wearable identity device (50) whose distance with said coordinates is less than a predetermined threshold and to get a reference biometric pattern (52) using said secure data,
and **in that** the gateless system comprises a verifier computer (75) configured to retrieve the measured biometric pattern and the reference biometric pattern and to check that the measured biometric pattern matches the reference biometric pattern and to identify the user as authorized only in case of successful checking.

12. The gateless system according to claim 11, wherein the gateless system is configured to retrieve the reference biometric pattern from a server using the secure data or to extract the reference biometric pattern from the secure data.

13. The gateless system according to claim 11, wherein the verifier computer (75) is configured to identify the user as unauthorized if the Ultra-Wideband reader fails to perform the reading of the reference biometric pattern.

14. The gateless system according to claim 11, wherein the measured biometric pattern is a facial data.

15. The gateless system according to claim 11, wherein the verifier computer (75) is configured to send to a supervisor (70) a warning message comprising a subset of the digital picture in case of unsuccessful checking.
